# FASCICULE DE BREVET EUROPEEN

(11) **EP 0 718 639 B1**
(45) Date de publication et mention de la délivrance du brevet: **13.10.1999**
(21) Numéro de dépôt: 95402575.5
(22) Date de dépôt: 17.11.1995
(51) Int. Cl.: G01V 1/00

(54) **Procédé de détection d'objets répartis dans une zone de terrain et dispositif mettant en oeuvre un tel procédé**
Verfahren und Vorrichtung zum Erkennen von Objekten, welche in einem Gebiet verteilt sind
Process and device for detecting objects distributed in a field

(30) Priorité: 20.12.1994 FR 9415337
(43) Date de publication de la demande: 26.06.1996
(73) Titulaire: GIAT INDUSTRIES, 78000 Versailles (FR)
(72) Inventeur: Arnaud, Philippe, F-45100 Orleans (FR); Laine, Loic, F-18230 Saint Doulchard (FR)
(74) Mandataire: Couderc, Thierry

(56) Documents cités:
- EP-A- 0 383 650
- EP-A- 0 591 061
- WO-A-90/10866
- DE-A- 2 548 041
- FR-A- 2 618 540
- GB-A- 2 259 146
- US-A- 3 815 704

## Description

Le domaine de la présente invention est celui des procédés et des dispositifs permettant de détecter des objets, et en particulier de détecter des mines réparties dans une zone de terrain.

On connaît des procédés et dispositifs de détection de mines utilisant des moyens magnétiques. Ces dispositifs mettent en oeuvre un générateur et une bobine conductrice. Lorsqu'un matériau conducteur se trouve au voisinage de la bobine, le courant circulant dans cette dernière est perturbé et un signal de détection est fourni par un circuit électronique de traitement.

De tels dispositifs de détection imposent d'amener la bobine de détection au voisinage de la mine, ce qui met en danger la personne chargée de manipuler le détecteur et rend les opérations de déminage longues et délicates.

De plus, le détecteur risque d'être activé par des objets magnétiques autres que les mines recherchées, ce qui provoque de fausses alarmes qui ralentissent encore les opérations de déminage.

Enfin de tels procédés et dispositifs sont inadaptés à la détection des mines modernes qui n'utilisent pratiquement pas de matériaux magnétiques.

On connaît par ailleurs, notamment par le brevet FR2696573, un procédé et dispositif d'examen utilisant le principe du retournement temporel d'une onde acoustique.

Ce procédé met en oeuvre un certain nombre de transducteurs (émetteurs/récepteurs) acoustiques et il permet de focaliser d'une façon pratiquement automatique un faisceau acoustique sur un objet dont la position est inconnue.

L'analyse des signaux recueillis après un certain nombre d'itérations permet de déterminer un front d'onde dont le sommet ou le foyer donnera la position de l'objet.

Un tel procédé est particulièrement bien adapté à l'imagerie médicale et permet de détecter la position de calculs ou de tumeurs dans le corps humain.

En effet, dans ce cas les transducteurs sont placés à des distances réduites (inférieures à 200 mm) des objets à détecter et la vitesse de propagation des ondes sonores reste sensiblement la même dans toutes les directions du domaine à explorer.

Ce procédé est par contre inadapté à la détection d'objets dans le sol notamment dans des terrains de dimensions importantes (de l'ordre de 5 à 10.000 m²).

En effet, les nombreuses hétérogénéités présentes dans une telle surface de terrain vont faire varier les vitesses de propagations des ondes sonores dans de grandes proportions, conduisant à une impossibilité de déterminer un front d'onde ayant un sommet dont la position soit suffisamment bien définie.

C'est le but de la présente invention que de proposer un procédé de détection ne présentant pas de tels inconvénients.

Ainsi le procédé selon l'invention permet d'assurer une détection par voie acoustique d'objets (en particulier de mines) répartis dans une zone de terrain. Il n'est donc pas tributaire de la nature des matériaux, magnétiques ou non, constituant les objets.

Le procédé selon l'invention peut être mis en oeuvre à distance des objets à détecter ce qui permet d'accroître la sécurité de l'opération lorsque les objets sont des mines.

Le procédé selon l'invention permet de détecter les objets dans une zone de terrain de dimensions importantes sans pour autant imposer un passage sur le terrain avec les moyens de détection, ce qui accroît encore la sécurité.

Le procédé selon l'invention autorise également, lorsqu'il est employé à la détection de mines, une activation ou une destruction à distance de ces dernières.

L'invention a également pour objet différents dispositifs permettant la mise en ouvre d'un tel procédé.

Ces dispositifs permettent d'assurer une mise en oeuvre rapide de la détection, ou encore une détection à distance fiable pour des zones de terrain de dimensions importantes.

Ainsi l'invention a pour objet un procédé de détection d'objets, et en particulier de mines réparties dans une zone de terrain, procédé caractérisé en ce qu'on met en oeuvre une pluralité de transducteurs acoustiques et qu'on réalise les étapes suivantes:
- on détermine au préalable une fréquence optimale d'emploi des transducteurs qui est fonction de la nature du sol, fréquence qui donne une amplitude de signal reçu qui est maximale sur une majorité de transducteurs lorsqu'elle est émise par l'un d'eux,
- on envoie dans le sol du terrain par au moins un transducteur une impulsion initiale brève et non focalisée à cette fréquence optimale,
- on enregistre les signaux d'écho renvoyés par le terrain et reçus par tous les transducteurs, chaque signal d'écho étant mémorisé en fonction du temps, avec comme origine des temps l'instant d'envoi de l'impulsion initiale,
- on sélectionne au moyen d'au moins une fenêtre temporelle, les signaux d'écho provenant d'un premier objet situé dans la zone de terrain,
- on effectue k retournements temporels successifs des signaux reçus par les transducteurs afin de focaliser la détection sur le premier objet et on mémorise les signaux réflechis à l'issue du dernier retournement temporel,
- on recherche alors les transducteurs pour lesquels les temps de propagation sont sensiblement égaux,
- on détermine au moins une direction, dite direction de localisation, dans laquelle se trouve le premier objet, direction définie comme la médiatrice du segment joignant deux transducteurs pour lesquels les temps de propagation sont sensiblement égaux.

Selon un premier mode de réalisation de l'invention, on détermine une position du premier objet sur sa direction de localisation en calculant les distances parcourues par les ondes réfléchies reçues par les transducteurs définissant la direction de localisation.

Selon un deuxième mode de réalisation de l'invention, les transducteurs acoustiques sont disposés suivant au moins deux lignes concourrantes et en ce qu'on détermine une position du premier objet comme étant le point ou la zone d'intersection d'au moins deux directions de localisation.

Selon une variante, après reception des premiers signaux échos on choisit le premier objet à traiter par retournement temporel par une analyse des ondes de forme suivant les différents echos de retour reçus par chaque transducteur suivie d'une comparaison de ces ondes de forme à une bibliothèque de signatures caractéristiques des principaux objets recherchés.

Selon une autre variante, on identifie le premier objet après exécution des k retournements temporels par une analyse des ondes de forme suivant les différents signaux echos reçus par chaque transducteur et comparaison de ces ondes de forme à une bibliothèque de signatures caractéristiques des principaux objets recherchés.

Selon une autre variante, après localisation et choix d'un premier objet, on envoie à celui-ci au moins un autre signal acoustique ayant la forme de celui mémorisé à l'issue du dernier retournement temporel, signal amplifié et dont l'intensité est suffisante pour faire bouger ou vibrer l'objet.

L'invention a également pour objet un dispositif de détection d'objets, et en particulier de mines réparties dans une zone de terrain, dispositif mettant en oeuvre un tel procédé et caractérisé en ce qu'il comporte au moins une rangée de transducteurs acoustiques reliés à une électronique de traitement, chaque transducteur étant porté par un support destiné à être enfoncé ou appliqué sur le sol.

Le dispositif de détection pourra comporter au moins une rangée de supports alignés ou au moins deux rangées de supports répartis suivant des lignes concourrantes.

Les supports pourront être solidaires d'au moins une rampe portée par au moins un véhicule, rampe dont la position est ajustable de façon à permettre le positionnement des supports par rapport au sol.

Chaque rangée de supports pourra être portée par un véhicule différent.

Les supports pourront être mis en place de façon individuelle sur le terrain, des moyens de liaison radio sont alors prévus entre chaque support et au moins une partie de l'électronique de traitement de façon à permettre une synchronisation des emissions des transducteurs.

L'invention sera mieux comprise à la lecture de la description de modes particuliers de réalisation, description faite en référence aux dessins annexés et dans lesquels:
- la figure 1 schématise un terrain dans lequel sont répartis des objets à détecter et au voisinage duquel est disposé un dispositif de détection selon l'invention,
- la figure 2 représente un tel terrain sur lequel est disposé un dispositif de détection selon un deuxième mode de réalisation de l'invention,
- la figure 3 est un schéma de principe de l'électronique de traitement associée au dispositif selon l'invention,
- la figure 4a représente un dispositif selon un premier mode de réalisation monté sur un véhicule,
- la figure 4b représente seule la rampe utilisée par le véhicule de la figure 4a,
- la figure 5 schématise la mise en oeuvre du dispositif selon l'invention au moyen de deux véhicules,
- la figure 6 représente un dispositif selon un autre mode de réalisation de l'invention,
- la figure 7 est un schéma de principe d'une électronique associée à un autre mode de réalisation de l'invention.

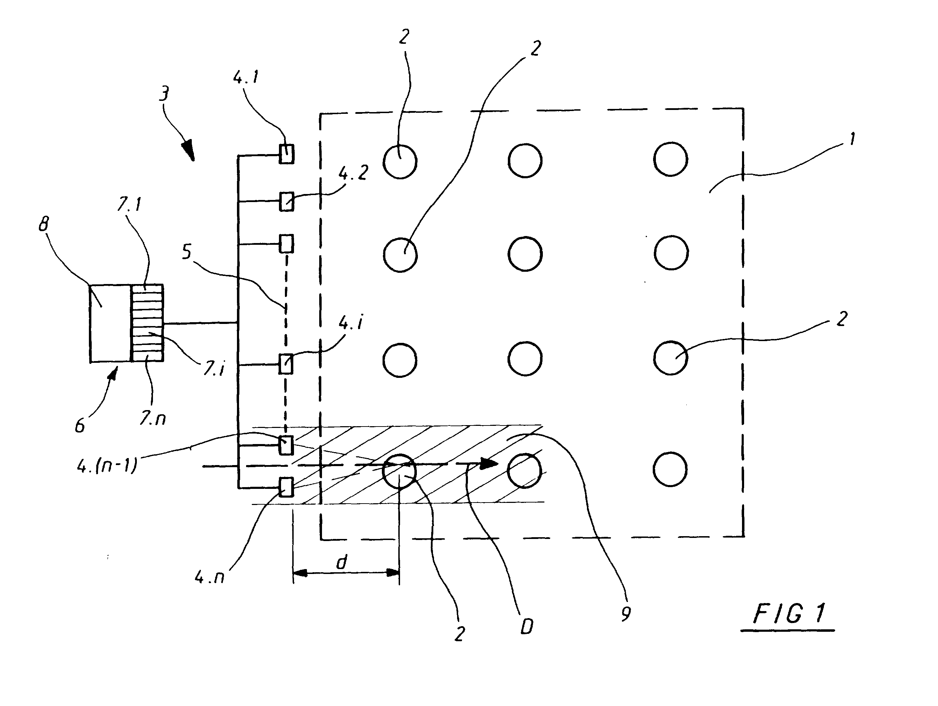

En se reportant à la figure 1, une zone de terrain 1, délimitée ici par des traits interrompus, contient un certain nombre d'objets 2, qui sont des mines enterrées.

Un dispositif de détection 3 selon un premier mode de réalisation de l'invention comprend un certain nombre de transducteurs acoustiques répartis suivant une ligne 5 (les différents transducteurs sont numérotés 4.1, 4.2, ... 4.i,... 4.n).

Les transducteurs sont constitués d'une façon classique par des plaquettes de céramique piézoélectrique ou par des transducteurs électromagnétiques.

Les transducteurs seront séparés par un pas de l'ordre de 200mm à 1m. On choisira avantageusement un pas dont la valeur est du même ordre de grandeur que la plus grande dimension des mines ou objets à détecter.

Dans certaines applications (qui seront précisées par la suite) on pourra adopter un pas relativement important (de l'ordre de 1 à 5m) cela afin d'effectuer une recherche rapide de mines dans une zone de terrain de grandes dimensions (jusqu'à 100 m x 100 m).

Les transducteurs sont disposés de façon à pouvoir émettre et recevoir des ondes acoustiques dans le sol. Ils sont portés par exemple par des supports en forme de piquets qui permettent leur mise en place à une profondeur optimale (par exemple la profondeur habituelle de mise en place des mines, soit de 200 à 300 mm ).

Les transducteurs pourraient également être portés par des supports simplement posés sur le sol. Dans ce cas, le support assure le maintien du transducteur plaqué contre le sol. Les ondes acoustiques sont alors émises en surface mais elles se propagent cependant dans une couche de terrain dont l'épaisseur est de l'ordre de 200 à 300mm, ce qui autorise la détection de mines qui sont habituellement enterrées à de telles profondeurs.

Les transducteurs 4.1 à 4.n sont reliés à un boîtier électronique de traitement 6 qui comprend un certain nombre de voies 7.1, 7.2,...7.i, ..7.n (une voie par transducteur) et un ensemble de commande et contrôle commun 8.

Suivant le procédé proposé par l'invention on va tout d'abord déterminer une fréquence optimale d'emploi des transducteurs.

Cette fréquence est fonction de la nature du sol dans lequel sont placées les mines.

Pour déterminer cette fréquence on va appliquer à un seul transducteur, de préférence celui disposé au milieu de la ligne 5, une fréquence non focalisée variable (par exemple au moyen d'un générateur de fréquence vobulée) et on va analyser les signaux reçus par les autres transducteurs en fonction de la fréquence émise.

On retiendra la fréquence de travail pour laquelle l'amplitude des signaux reçus par les transducteurs est maximale sur une majorité des transducteurs (au moins 50% des transducteurs).

Concrètement les fréquences d'emploi varient le plus souvent entre 10 Hz et 100 kHz suivant la nature du sol.

Une fois la fréquence d'emploi déterminée, on envoie dans le sol du terrain par au moins un transducteur une impulsion initiale brève et non focalisée à cette fréquence optimale.

On applique alors la méthode classique de focalisation des ondes sonores par retournement temporel des signaux.

Cette méthode est connue de l'homme du métier et décrite notamment dans les brevets FR2642640 et FR2696573, elle ne sera donc pas décrite ici en détails.

La méthode consiste à :
- enregistrer les signaux d'écho renvoyés par le terrain et reçus par tous les transducteurs, chaque signal de retour étant mémorisé en fonction du temps, avec comme origine des temps l'instant d'envoi de l'impulsion initiale,
- sélectionner au moyen d'au moins une fenêtre temporelle, les signaux d'écho provenant d'une première mine 2 située dans la zone de terrain,
- effectuer k retournements temporels successifs des signaux reçus par les transducteurs afin de focaliser la détection sur la première mine,
- mémoriser les signaux réfléchis à l'issue du dernier retournement temporel.

Concrètement on réalisera au moins 5 retournements temporels pour assurer une focalisation suffisante.

Le nombre de retournements temporels (pair ou impair) dépend de la nature du sol, on pourra préférer un nombre de retournements impair afin d'avoir une symétrie du front d'onde des signaux obtenus.

On estimera que la focalisation obtenue est suffisante lorsque l'écho renvoyé par une cible est suffisamment discriminé des autres, par exemple lorsque son amplitude est au moins trois fois plus importante que celle des autres.

A l'issue de cette dernière étape le front d'onde reçu du terrain n'a pas une courbure suffisamment uniforme pour permettre la détermination d'un centre ou foyer position de la mine.

Conformément au procédé selon l'invention, on recherche alors les transducteurs pour lesquels les temps de propagation mesurés sont sensiblement égaux.

On choisira avantageusement les transducteurs consécutifs sur la ligne 5 qui répondent à cette condition. Un tel choix permet d'améliorer la précision de la localisation. En effet, lorsque les transducteurs sont proches l'un de l'autre, les vitesses de propagation dans le sol sont sensiblement les mêmes pour les signaux reçus par ces deux transducteurs.

L'égalité des temps de propagation sera appréciée par exemple en comparant les signaux deux à deux et en choisissant deux transducteurs pour lesquels l'écart entre deux échos est minimum. Concrètement on fera les différences entres les signaux deux par deux et on choisira ceux pour lesquels cette différence est minimale.

On détermine alors une direction D, dite direction de localisation, sur laquelle se trouve en principe la première mine. Cette direction est définie comme la médiatrice d'un segment joignant deux transducteurs pour lesquels les temps de propagation sont sensiblement égaux.

Chaque temps de propagation est mesuré par l'ensemble de commande 8 comme l'écart temporel séparant, pour un transducteur donné, l'envoi d'un signal et le retour de l'écho correspondant à la mine.

En se reportant à la figure 1, on a représenté une direction de localisation D qui correspond à la médiatrice entre les transducteurs 4.(n-1) et 4.n. En fait la mine n'est pas obligatoirement sur la direction D mais elle se trouve dans une bande 9 (hachurée) qui est perpendiculaire à la ligne 5 de répartition des transducteurs. Cette bande est centrée sur la direction D et sa largeur est égale au double du pas séparant les transducteurs.

D'une façon pratique on considérera que la mine se trouve sur la direction D et/ou dans la bande 9 et à une distance d de la ligne 5 qui est déterminée comme la moitié du rapport de la vitesse de propagation de l'onde sonore dans le sol au temps de propagation.

Pour effectuer ce calcul, la vitesse de propagation dans le sol sera évaluée par une mesure spécifique. Par exemple une mesure réalisée à la première étape lors de la détermination de la fréquence de travail optimale. En effet il est aisé lors de cette étape de faire les différents rapports entre les distances entre le transducteur émetteur et chaque transducteur récepteur et les temps de propagation mesurés.

La vitesse de propagation évaluée pourra être choisie comme une valeur moyenne des différentes vitesses de propagation mesurées.

On pourra également déterminer la position de la mine sur la direction D par le calcul du point d'intersection des cercles centrés sur chacun des deux transducteurs considérés, cercles dont les diamètres seront calculés comme égaux au rapport de la vitesse de propagation de l'onde sonore dans le sol au temps de propagation mesuré pour le transducteur considéré.

Ce mode de calcul est plus précis lorsque les transducteurs retenus ne sont pas contigus.

Le principe du choix d'une fenêtre temporelle est connu par les documents cités précédemment. Il consiste à ne ré-émettre lors du retournement que les signaux provenant d'une certaine zone du terrain dans laquelle une mine est potentiellement présente.

D'une façon classique la fenêtre temporelle est choisie à partir du premier signal d'écho reçu par le dispositif. On choisit habituellement de retourner les signaux qui entourent certains maximas repérés sur les échos, maximas qui correspondent en principe à une onde réfléchie par un objet.

Compte tenu des dimensions du terrain à explorer on s'attachera tout d'abord aux objets les plus proches des transducteurs, la fenêtre temporelle ignorera donc les échos provenant des objets les plus lointains.

On pourra avantageusement analyser les ondes de forme qui suivent les différents échos de retour reçus par chaque transducteur et comparer ces ondes de forme à une bibliothèque de signatures caractéristiques des principales mines recherchées.

Une telle bibliothèque est facile à établir en réalisant un étalonnage du dispositif sur un terrain connu dans lequel seront enterrées successivement les différentes mines connues que l'on peut être amené à rechercher.

La comparaison entre les ondes de forme et la bibliothèque de signatures sera de préférence faite au moyen de circuits neuronaux. De tels circuits sont connus de l'homme du métier et ils permettent de réaliser rapidement les calculs de reconnaissance de formes.

L'avantage de l'emploi du procédé itératif de retournement temporel des signaux permet d'assurer une focalisation du signal sur une mine particulière. On élimine ainsi les signaux parasites et on accroit la précision de localisation par les transducteurs. Il devient facile d'isoler au moins deux transducteurs contigus pour lesquels le temps de propagation est sensiblement égal.

Après exécution de k retournements temporels, on pourra pratiquer une deuxième identification de la mine avec un niveau de précision supérieur.

Pour cela on effectuera encore une comparaison des ondes de forme qui suivent les différents signaux échos reçus par chaque transducteur avec une bibliothèque de signatures de mines.

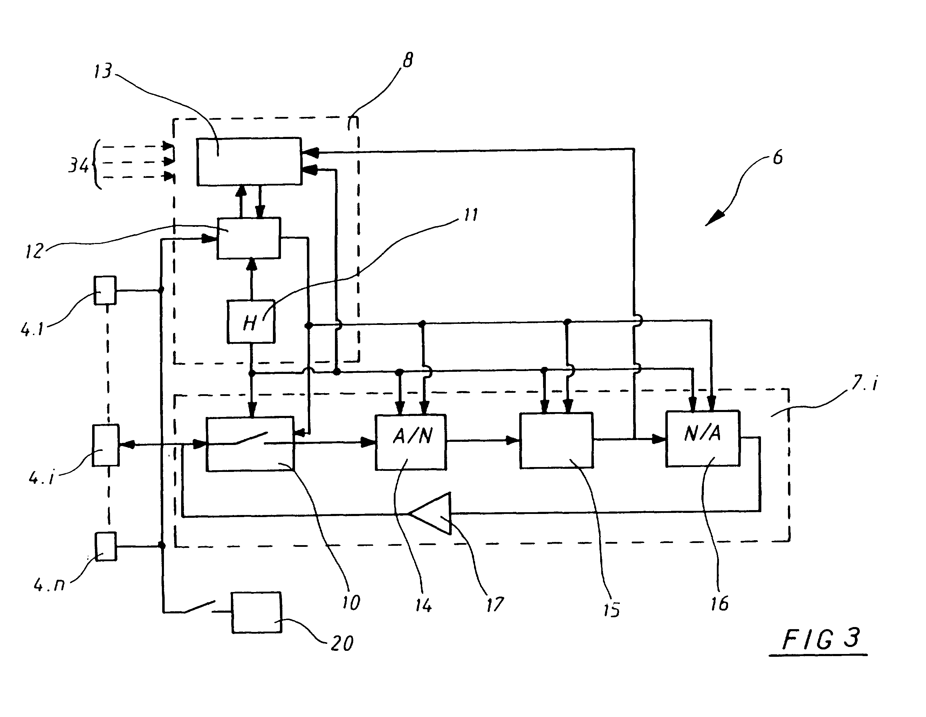

La figure 3 représente un mode de réalisation d'un boîtier électronique de traitement 6 permettant de mettre en oeuvre le procédé précédent. Cette électronique de traitement comprend des voies de traitement 7.1,..,7.i,..7.n et un ensemble de commande 8 commun.

Chaque transducteur 4i est associé à une voie de traitement 7.i (une seule voie est représentée ici).

Chaque voie 7.i comprend un échantillonneur 10 qui est destiné à fournir des échantillons analogiques du signal reçu par le transducteur 4.i à la fréquence d'une horloge 11 de l'ensemble de commande 8. La fréquence d'échantillonnage donnée par l'horloge sera fonction de la fréquence optimale de travail. Elle sera de préférence supérieure à R/dxV, expression dans laquelle R est la résolution ou le nombre de points du signal (100 par exemple), d est la principale dimension du plus petit objet cherché et V la vitesse de propagation moyenne des ondes dans le sol.

Les intervalles de temps pendant lesquels l'échantillonneur travaille sont déterminés par un cadenceur 12 (lui aussi solidaire de l'ensemble de commande 8). Le cadenceur permet de définir la fenêtre temporelle dans laquelle les signaux échos seront considérés par les différents échantillonneurs. La durée de la fenêtre temporelle sera choisie suffisante pour que chaque transducteur puisse recevoir un écho retour correspondant à la mine.

D'une façon connue cette fenêtre temporelle a été déterminée après réception des premiers signaux d'échos, de façon à encadrer tous les maximas souhaités correspondant à la première mine.

Dans le cas où la distance entre les transducteurs extrêmes (1 et n) est importante (supérieure à 50m), il sera possible de définir des fenêtres temporelles différentes pour plusieurs groupes de transducteurs afin de donner à chaque fenêtre une largeur suffisamment réduite pour éliminer les échos non souhaités et améliorer la focalisation.

La ou les fenêtres temporelles seront choisies par l'utilisateur par une action sur le cadenceur 12 au moyen d'un calculateur 13 (lui aussi solidaire de l'ensemble de commande 8) et doté d'une interface appropriée avec l'utilisateur (clavier, écran...).

Pour une voie 7.i donnée, l'échantillonneur 10 est suivi d'un convertisseur analogique/numérique 14. Il suffit en général d'une conversion sur dix bits pour représenter de façon satisfaisante les échos. Les mots représentatifs d'un échantillon sont stockés dans une mémoire 15, organisée en pile d'attente (du type dernier entré-premier sorti).

La capacité de cette mémoire sera choisie suffisante pour stocker tous les échantillons reçus pendant la durée de la fenêtre temporelle.

Le cadenceur 12 est également prévu pour provoquer l'émission d'un front d'onde retourné au bout d'un temps bref après la fin de réception de l'écho reçu (quelques millisecondes).

Chaque voie 7.i comporte pour permettre la ré-émission un convertisseur numérique/analogique 16, suivi éventuellement par un amplificateur 17 dont la sortie attaque le transducteur associé 4.i.

Un circuit d'excitation 20 permet d'appliquer à un ou plusieurs des transducteurs l'impulsion initiale brève et non focalisée à la fréquence optimale.

On pourra utiliser aussi ce circuit d'excitation pour déterminer la fréquence d'emploi optimale.

Le circuit 20 est représenté relié à tous les transducteurs. En fait des moyens (non représentés sont prévus pour le connecter à un ou plusieurs transducteurs au choix de l'utilisateur.

Un tel boîtier électronique de traitement 6 est décrit dans les brevets FR2642640 et FR2696573.

Le calculateur 13 sera relié à toutes les voies 7.i associées aux différents transducteurs. Il en est de même pour l'horloge 11 et le cadenceur 12. La synchronisation des différentes voies étant essentielle pour assurer le bon fonctionnement du dispositif de focalisation par retournement temporel des échos. On a schématisé en 34 les connexions reliant l'ensemble de commande et contrôle 8 aux différentes voies de traitement 7.i.

Le calculateur 13 effectue la comparaison des signaux reçus avec la bibliothèque de mines et il comprendra donc les mémoires contenant la bibliothèque de signatures ainsi que les circuits neuronaux nécessaires.

Le calculateur 13 détermine également (après exécution des retournements temporels) les transducteurs pour lesquels le temps de parcours est égal. Il définit alors la direction de localisation et/ou la bande de localisation.

Il calcule la distance d à laquelle doit se trouver la mine. Un écran de visualisation pourra faciliter l'exploitation des données par l'utilisateur (visualisation des directions et/ou des bandes ainsi que de la position théorique des mines).

Après détection et localisation d'une première mine, on réitérera le procédé selon l'invention de façon à détecter et localiser une autre mine. On choisira pour cela une autre fenêtre temporelle.

Après repérage d'au moins quatre mines, il sera possible de rechercher sur ces quatre premières mines la présence d'un motif de pose, c'est à dire d'une maille élémentaire qui est habituellement répétée de façon régulière sur le terrain lors de l'enfouissement des mines.

La détermination de ce motif permettra d'accélérer la recherche des autres mines en permettant une définition rapide des fenêtres temporelles qui correspondront aux zones de terrain pour lesquelles une mine peut théoriquement se trouver si la maille est exacte.

Il est ainsi possible de définir un algorithme d'exploration du terrain qui permettra de donner rapidement une image de la répartition des mines sur le terrain.

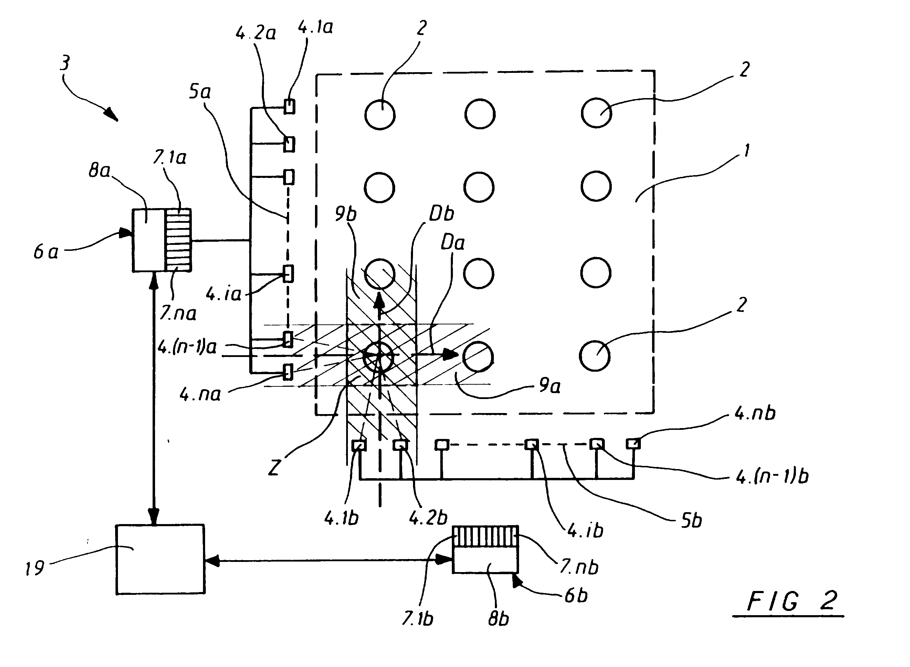

La figure 2 montre une zone de terrain 1 qui contient un certain nombre de mines 2 qui sont enterrées.

Suivant ce mode de réalisation de l'invention, le dispositif de détection 3 comprend des transducteurs acoustiques qui sont répartis suivant deux lignes concourrantes 5a et 5b.

Les transducteurs sont numérotés de la façon suivante:
4.1a, 4.2a, ... 4.ia,... 4.na pour la ligne 5a.
4.1b, 4.2b, ... 4.ib,... 4.nb pour la ligne 5b.

Chaque ligne de transducteur est commandée par un boîtier électronique de traitement spécifique 6a, 6b.

Chaque boîtier 6a et 6b comprend comme précédemment des voies de traitement (7.1a,... 7.ia,... 7.na et 7.1b, ..7.ib, ..7.nb) ainsi qu'un ensemble de commande et contrôle commun 8a ou 8b.

Les boîtiers de traitement 6a et 6b sont reliés à un module de pilotage commun 19.

Le fonctionnement de cette variante du dispositif est dérivé de celui précédemment décrit en référence à la figure 1.

Après détermination des fréquences optimales d'emploi pour chaque ligne de transducteurs, le module de pilotage 19 va commander tout d'abord la focalisation par retournement temporel des transducteurs de la première ligne 5a sur une première mine. Cette première étape va conduire à définir une direction de localisation Da, définie comme la médiatrice du segment joignant deux transducteurs (de préférence contigus) et pour lesquels les temps de propagation des signaux sont sensiblement égaux.

Sur la figure 2 on a représenté la direction de localisation Da qui correspond à la médiatrice entre les transducteurs 4.(n-1)a et 4.na.

Ensuite, la première ligne 5a étant au repos, le module de pilotage 19 va commander la focalisation par retournement temporel des transducteurs de la deuxième ligne 5b sur la même première mine.

On choisira une fenêtre temporelle appropriée afin d'être sûr que la focalisation intervienne effectivement pour la même mine. Ce choix se fera au moyen d'une évaluation de la distance réelle entre la première direction de localisation Da et la ligne 5b. Les positions réelles des lignes seront connues par des moyens appropriés, associant par exemple plateformes inertielles, systèmes GPS (positionnement dans l'espace par satellite), télémètres.

On recherchera encore pour la ligne 5b les transducteurs pour lesquels les temps de propagation des signaux sont sensiblement égaux, ce qui va conduire à définir une direction de localisation Db, définie comme la médiatrice du segment joignant ces deux transducteurs.

Sur la figure 2 on a représenté la direction de localisation Db qui correspond à la médiatrice entre les transducteurs 4.1b et 4.2b.

La position théorique de la mine 2 sera évaluée comme l'intersection des deux directions de localisation Da et Db.

La mine n'est pas obligatoirement à l'intersection des directions Da et Db mais elle se trouve dans une zone Z qui est l'intersection des bandes 9.a et 9.b (hachurées).

Chaque bande est parallèle à la direction Da ou Db considérée et centrée sur cette dernière. La largeur de chaque bande est égale au double du pas séparant les transducteurs.

L'avantage de cette variante est qu'il n'est plus nécessaire de déterminer une vitesse de propagation des ondes sonores dans le sol. La précision obtenue est donc supérieure.

Les boîtiers électroniques de traitement 6 qui permettent de mettre en oeuvre ce procédé sont analogues à ceux décrits précédemment en référence à la figure 3.

Afin d'assurer une homogénéité des fonctionnements des différents transducteurs on pourra choisir avantageusement d'utiliser un ensemble de commande et contrôle 8 qui soit commun aux deux lignes de transducteurs, cette partie de l'électronique de traitement sera donc inclue dans le module de pilotage 19.

Un calculateur commun assurera alors la détermination des différentes directions et/ou bandes de localisation et en déduira les positions des différentes mines comme intersection de ces directions et/ou bandes.

Les liaisons entre les boîtiers 6a, 6b et le module de pilotage 19 pourront être filaires ou encore réalisées par voie radio ou optique.

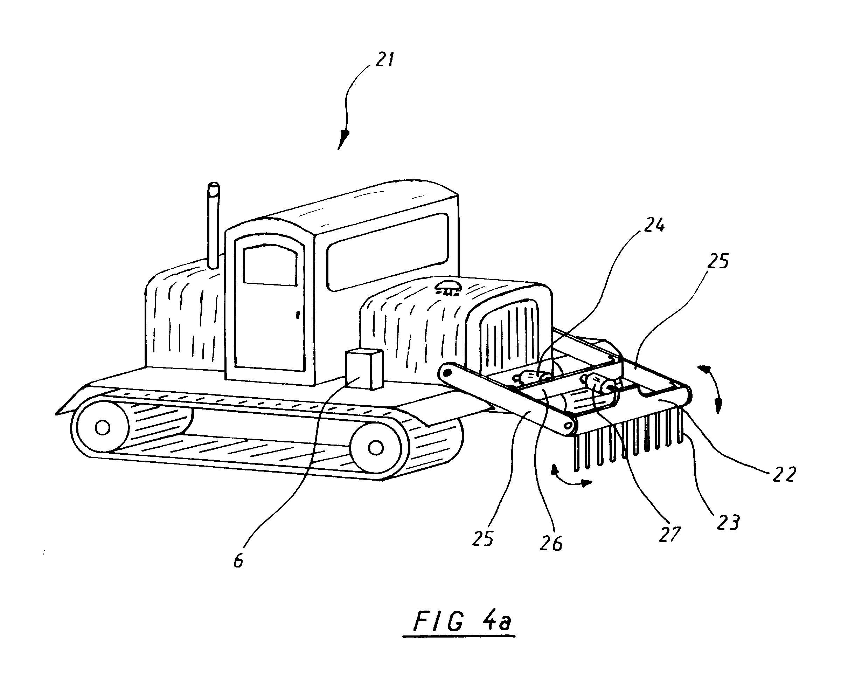

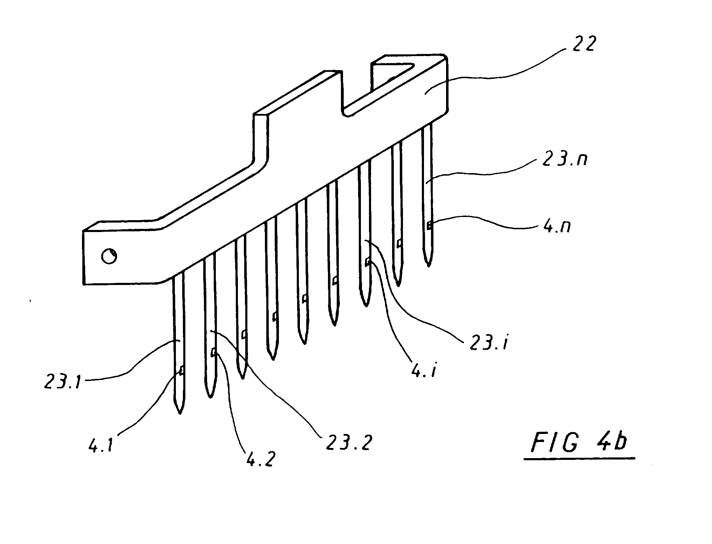

La figure 4a représente un véhicule chenillé 21 qui porte une rampe 22 sur laquelle sont fixés des supports 23.1, 23.2,...23.n, ici réalisés sous la forme de piquets. Cette rampe est représentée seule à la figure 4b. Chaque piquet 23.i porte un transducteur 4.i. Les piquets permettent de positionner tous les transducteurs à une même profondeur dans le sol.

La position de la rampe, donc l'enfoncement des piquets est ajustable au moyen d'un premier vérin 24 (hydraulique ou électrique) qui permet de régler l'inclinaison des bras 25 de soutien de la rampe par rapport au véhicule 21.

Ce premier vérin est monté entre le véhicule et une entretoise 26 solidaire des bras 25. Un deuxième vérin 27 est placé entre l'entretoise 26 et la rampe 22. Il permet de faire pivoter la rampe 22 par rapport aux bras 25 et de régler ainsi l'angle d'enfoncement des piquets 23 dans le sol. Des capteurs non représentés permettent de mesurer la position des piquets par rapport au sol (angle et enfoncement). Le véhicule 21 porte le boîtier de traitement 6 qui sera éventuellement relié par radio à un module de pilotage qui contiendra alors au moins une partie de l'électronique de traitement.

A titre de variante les piquets pourraient être remplacés par des supports qui ne sont pas enfoncés dans le sol mais qui permettent le positionnement des transducteurs en contact avec le sol.

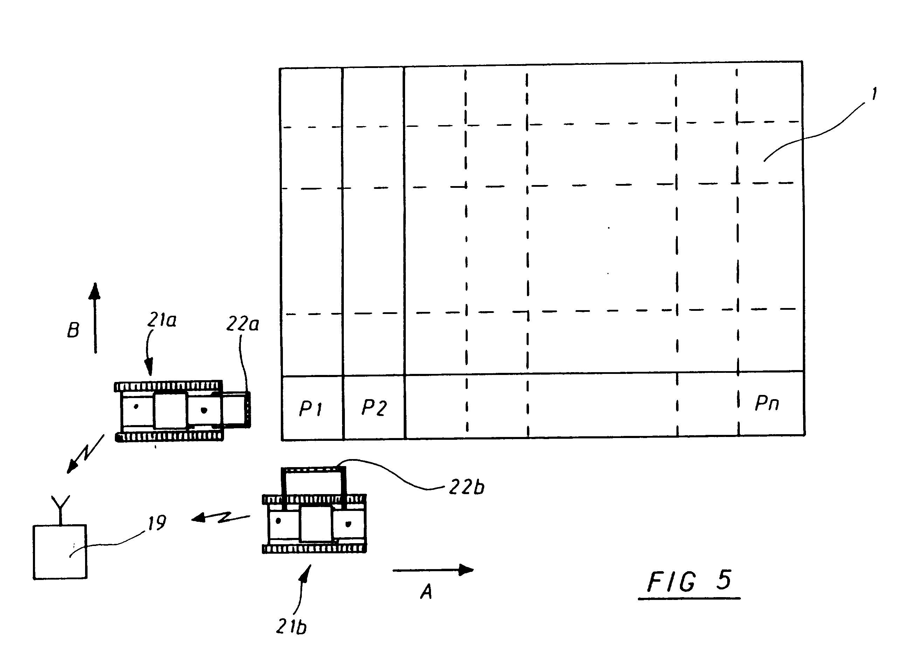

La figure 5 schématise la mise en oeuvre du dispositif selon l'invention au moyen de deux véhicules 21a et 21b.

Le véhicule 21a porte une rampe 22a sur laquelle sont fixés des supports dotés de transducteurs, tels des piquets.

Le véhicule 21b porte une rampe 22b sur laquelle sont aussi fixés aussi des supports dotés de transducteurs.

La rampe 22b est disposée latéralement au véhicule 21b (avec un montage de bras et vérins adapté) cela afin de faciliter la progression du véhicule le long d'une direction A avec un nombre de manoeuvres minimisé. Il serait évidemment possible d'utiliser un montage de rampe identique sur les deux véhicules. On facilitera le repositionnement de chaque véhicule en le dotant de moyens de localisation (centrale inertielle, système GPS).

Une telle disposition permet de mettre en oeuvre le procédé décrit précédemment en référence à la figure 2.

On explorera une zone de terrain 1 très étendue en laissant le véhicule 21a immobile puis en faisant progresser le véhicule 21b le long de la direction A. Les recherches de mines se feront ainsi successivement dans des portions de terrains adjacentes (P1, P2, ..Pi,...Pn).

Après traitement de toutes les portions Pi on déplacera le véhicule 21a suivant la direction B pour explorer une autre partie de la zone 1.

Les opérations seront coordonnées par le module de pilotage 19 qui sera de préférence relié par radio à chaque véhicule.

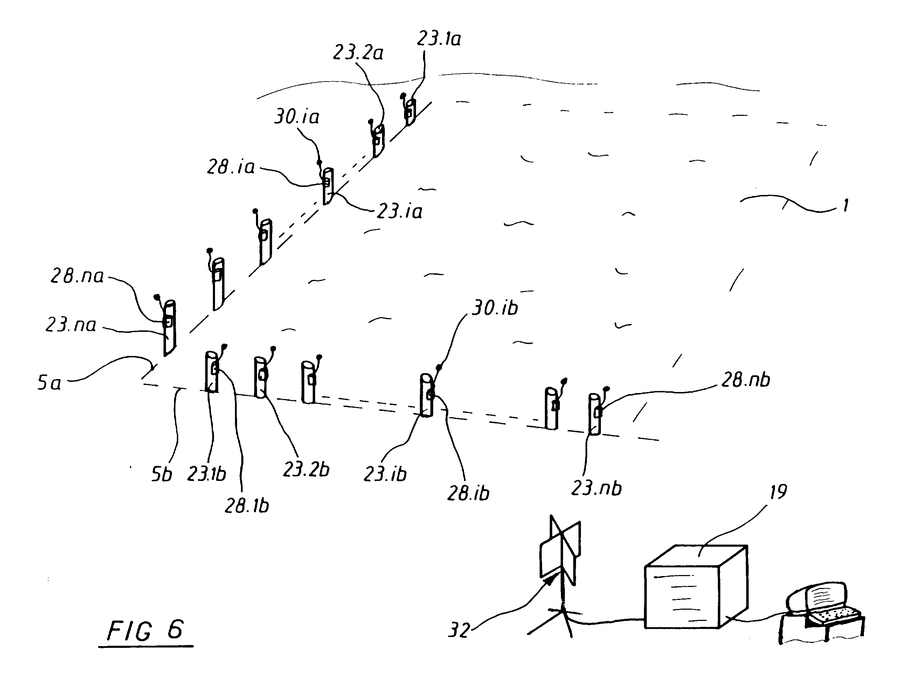

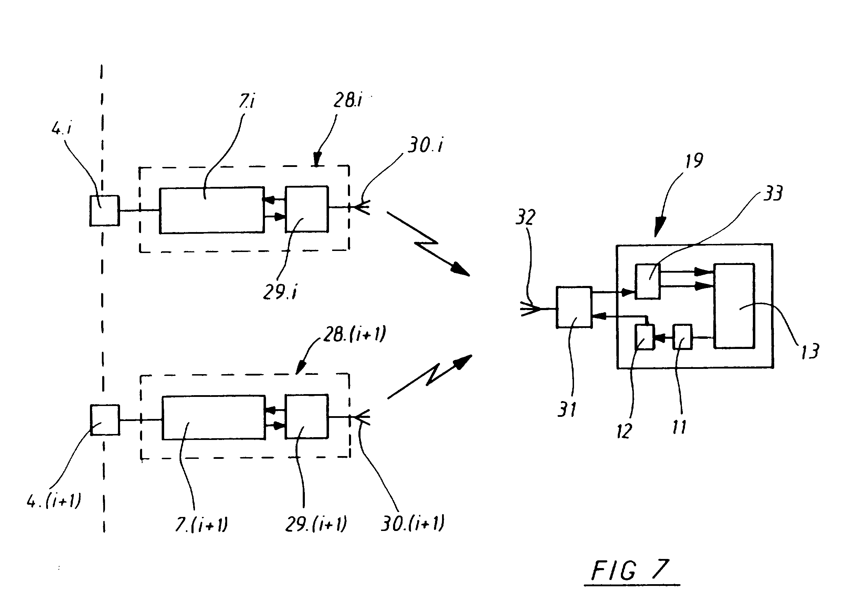

Les figures 6 et 7 représentent un dispositif selon un autre mode de réalisation de l'invention.

Dans ce mode de réalisation, les transducteurs sont encore portés par des supports en forme de piquets 23, mais chaque piquet est mis en place de façon individuelle sur la zone de terrain 1.

Cette zone de terrain 1 a été entourée par les piquets 23 qui sont répartis suivant deux lignes concourrantes. Ce mode de réalisation de l'invention met encore en oeuvre le procédé décrit en référence à la figure 2.

Les écartements de différents piquets ont été mesurés avec précision lors de leur mise en place.

Chaque piquet 23.ia ou 23.ib porte un boîtier 28.ia ou 28.ib qui contient la voie de traitement 7.i associée au transducteur 4.i porté par le piquet (voir aussi la figure 7).

Le boîtier 28.i contient également un émetteur/récepteur radio 29.i et il porte une antenne 30.i.

Le module de pilotage 19 est disposé à distance de la zone de terrain 1. Il contiendra lui aussi un émetteur / récepteur radio 31 couplé à une antenne 32.

Le module de pilotage contient une partie de l'électronique de traitement. Il assure la fonction d'ensemble de commande et contrôle commun 8 décrite précédemment en référence à la figure 3. Ainsi il contiendra une horloge 11, un cadenceur 12 et un calculateur 13. L'emploi d'une horloge et d'un cadenceur commun ainsi que d'une liaison radio permet d'assurer une synchronisation des émissions des différents transducteurs, même pour un nombre important de ces derniers et pour des distances importantes.

Un décodeur 33 permettra de transformer les informations radio envoyées par les différents piquets en informations utilisables par le calculateur.

Comme cela a été décrit précédemment en référence à la figure 2, le module de pilotage 19 réalisera tout d'abord une focalisation par retournement Lemporel à partir d'une première ligne de transducteurs Sa puis réalisera ensuite et de façon indépendante une focalisatibn à partir de la deuxième ligne de transducteurs 5b.

Ce mode de réalisation de l'invention permet de traiter en une seule opération de grandes surfaces de terrain (supérieures à 10m x 10m). Cependant la mise en place est plus longue, ce mode est donc plutôt réservé aux opérations de dépollution de zones après un conflit.

Là encore il est possible d'utiliser des supports qui ne sont pas enfoncés dans le sol mais qui permettent le positionnement des transducteurs en contact avec le sol.

Dans tous les modes de réalisation de l'invention décrits précédemment, il sera possible après détection d'une mine de provoquer son initiation ou encore de la faire bouger, ce qui pourra faciliter son repérage suite à la modification de l'aspect du terrain qui en résultera.

Pour cela on focalisera sur elle, en utilisant les derniers signaux d'échos mémorisés, une énergie acoustique importante. On enverra ainsi sur elle un dernier signal retourné temporellement mais dont l'amplitude sera considérablement amplifiée au moyen d'un générateur de puissance approprié (par exemple dans un rapport de 1000 à 100.000 suivant la nature, dure ou meuble, du sol).

L'invention a été décrite dans le cadre de son application à la détection de mines terrestres. Elle est bien entendue applicable à la détection de mines marines enterrées ou non ou encore à la détection d'objets enterrés ou au repérage d'hétérogénéités du sol.

## Revendications

1. Procédé de détection d'objets (2), et en particulier de mines réparties dans une zone de terrain (1), caractérisé en ce qu'on met en oeuvre une pluralité de transducteurs acoustiques (4.1,..4.i,..4n) et qu'on réalise les étapes suivantes:
- on détermine au préalable une fréquence optimale d'emploi des transducteurs qui est fonction de la nature du sol, fréquence qui donne une amplitude de signal reçu qui est maximale sur une majorité de transducteurs lorsqu'elle est émise par l'un d'eux,
- on envoie dans le sol du terrain par au moins un transducteur une impulsion initiale brève et non focalisée à cette fréquence optimale,
- on enregistre les signaux d'écho renvoyés par le terrain et reçus par tous les transducteurs, chaque signal d'écho étant mémorisé en fonction du temps, avec comme origine des temps l'instant d'envoi de l'impulsion initiale,
- on sélectionne au moyen d'au moins une fenêtre temporelle, les signaux d'écho provenant d'un premier objet situé dans la zone de terrain,
- on effectue k retournements temporels successifs des signaux reçus par les transducteurs afin de focaliser la détection sur le premier objet et on mémorise les signaux réflechis à l'issue du dernier retournement temporel,
- on recherche alors les transducteurs pour lesquels les temps de propagation sont sensiblement égaux,
- on détermine au moins une direction (D), dite direction de localisation, dans laquelle se trouve le premier objet, direction définie comme la médiatrice du segment joignant deux transducteurs pour lesquels les temps de propagation sont sensiblement égaux.

2. Procédé de détection selon la revendication 1, caractérisé en ce qu'on détermine une position du premier objet sur sa direction de localisation (D) en calculant les distances parcourues par les ondes réfléchies reçues par les transducteurs définissant la direction de localisation.

3. Procédé de détection selon la revendication 1, caractérisé en ce que, les transducteurs acoustiques sont disposés suivant au moins deux lignes concourrantes (5a,5b) et en ce qu'on détermine une position du premier objet comme étant le point ou la zone d'intersection (Z) d'au moins deux directions de localisation (Da,Db).

4. Procédé de détection selon une des revendications 1 à 3, caractérisé en ce qu'après reception des premiers signaux échos on choisit le premier objet (2) à traiter par retournement temporel par une analyse des ondes de forme suivant les différents echos de retour reçus par chaque transducteur suivie d'une comparaison de ces ondes de forme à une bibliothèque de signatures caractéristiques des principaux objets recherchés.

5. Procédé de détection selon une des revendications 1 à 4, caractérisé en ce qu'on identifie le premier objet (2) après exécution des k retournements temporels par une analyse des ondes de forme suivant les différents signaux echos reçus par chaque transducteur et comparaison de ces ondes de forme à une bibliothèque de signatures caractéristiques des principaux objets recherchés.

6. Procédé de détection selon une des revendications 1 à 5, caractérisé en ce que après localisation et choix d'un premier objet, on envoie à celui-ci au moins un autre signal acoustique ayant la forme de celui mémorisé à l'issue du dernier retournement temporel, signal amplifié et dont l'intensité est suffisante pour faire bouger ou vibrer l'objet.

7. Dispositif de détection d'objets (2), et en particulier de mines réparties dans une zone de terrain, mettant en oeuvre le procédé selon une des revendications 1 à 6, caractérisé en ce qu'il comporte au moins une rangée de transducteurs acoustiques (4.1,..4.i,..4n) reliés à une électronique de traitement (6), chaque transducteur (4.i) étant porté par un support (23.i) destiné à être enfoncé ou appliqué sur le sol.

8. Dispositif de détection selon la revendication 7, caractérisé en ce qu'il comporte au moins une rangée de supports (23) alignés.

9. Dispositif de détection selon la revendication 7, caractérisé en ce qu'il comporte au moins deux rangées de supports (23) répartis suivant des lignes concourrantes.

10. Dispositif de détection selon une des revendications 7 à 9, caractérisé en ce que les supports (23) sont solidaires d'au moins une rampe (22) portée par au moins un véhicule (21), rampe dont la position est ajustable de façon à permettre le positionnement des supports (23) par rapport au sol.

11. Dispositif de détection selon les revendications 9 et 10, caractérisé en ce que chaque rangée de supports est portée par un véhicule différent (21a,21b).

12. Dispositif de détection selon une des revendications 7 à 9, caractérisé en ce que les supports (23) sont mis en place de façon individuelle sur le terrain (1), des moyens de liaison radio (29,30) étant prévus entre chaque support et au moins une partie de l'électronique de traitement (6) de façon à permettre une synchronisation des emissions des transducteurs (4).

## Patentansprüche

1. Verfahren zum Erkennen von Objekten (2) und vor allem von Minen, die über eine Geländezone (1) verteilt sind, gekennzeichnet dadurch, daß man eine Mehrzahl akustischer Meßwandler (4.1, ... 4.i, ... 4n) verwendet und folgende Etappen durchführt:
- man bestimmt zuerst eine optimale Arbeitsfrequenz der Meßwandler, die von der Beschaffenheit des Bodens abhängt und eine Empfangssignalamplitude, die an einem Großteil der Meßwandler maximal ist, wenn sie von einem von ihnen abgegeben wird,
- man sendet in den Geländeboden über mindestens einen Meßwandler einen kurzen, nicht fokussierten Anfangsimpuls mit dieser optimalen Frequenz,
- man registriert die Echosignale, die vom Gelände zurückgesendet und von allen Meßwandlern empfangen werden, wobei jedes Echosignal abhängig von der Zeit gespeichert wird und als Ursprung der Zeiten der Augenblick des Sendens des Anfangsimpulses verwendet wird,
- man wählt mit mindestens einem Zeitfenster die Echosignale aus, die von einem ersten Objekt in der Geländezone zurückgesendet werden,
- man führt k aufeinanderfolgende zeitliche Umkehrungen der von den Meßwandlern empfangenen Signale durch, um die Erkennung auf ein erstes Objekt zu fokussieren und speichert die nach der ersten zeitlichen Umkehrung reflektierten Signale,
- man sucht die Meßwandler, bei welchen die Fortpflanzungszeiten in etwa gleich sind,
- man bestimmt mindestens eine Richtung (D), Lokalisierungs-richtung genannt, in der sich das erste Objekt befindet, und die als die Mittelsenkrechte des Segments definiert wird, das die beiden Meßwandler vereint, bei welchen die Fortpflanzungszeiten in etwa gleich sind.

2. Erkennungsverfahren gemäß dem Anspruch 1, gekennzeichnet dadurch, daß man eine Position des ersten Objektes auf seiner Lokalisierungsrichtung (D) bestimmt, indem man die Entfernungen berechnet, die die von den Meßwandlern empfangenen reflektierten Wellen durchlaufen und die Lokalisierungsrichtung bestimmen.

3. Verfahren gemäß dem Anspruch 1, gekennzeichnet dadurch, daß die akustischen Meßwandler entlang mindestens zweier gemeinsam wirkender Linien (5a, 5b) angeordnet sind, und dadurch, daß man eine Position des erstes Objektes als den Punkt oder die Schnittzone (Z) von mindestens zwei Lokalisierungsrichtungen (Da, Db) bestimmt.

4. Erkennungsverfahren gemäß einem der Ansprüche 1 bis 3, gekennzeichnet dadurch, daß nach Empfang der ersten Echosignale ein erstes Objekt (2) ausgewählt wird, das durch zeitliche Umkehrung durch eine Analyse der Formwellen gemäß den verschiedenen von jedem Meßwandler empfangenen Rückkehrechos zu behandeln ist, gefolgt von einem Vergleich dieser Formwellen mit einer Bibliothek der charakteristischen Signaturen der wichtigsten gesuchten Objekte.

5. Erkennungsverfahren gemäß einem der Ansprüche 1 bis 4, gekennzeichnet dadurch, daß man das erste Objekt (2) nach der Durchführung von k zeitlichen Umkehrungen durch eine Analyse der Formwellen identifiziert, und zwar gemäß den verschiedenen von jedem Meßwandler empfangenen Echosignalen und durch Vergleichen dieser Formwellen mit einer Bibliothek der charakteristischen Signaturen der wichtigsten gesuchten Objekte.

6. Erkennungsverfahren gemäß einem der Ansprüche 1 bis 5, gekennzeichnet dadurch, daß nach Lokalisierung und Auswahl eines ersten Objektes diesem mindestens ein anderes akustisches Signal gesandt wird, das die Form des nach dem ersten zeitlichen Umkehren gespeicherten Objektes hat, wobei dieses Signal verstärkt wird und seine Intensität ausreicht, um das Objekt zu bewegen oder in Schwingung zu versetzen.

7. Erkennungsvorrichtung von Objekten (2) und vor allem von Minen, die in einer Geländezone verteilt sind, das ein Verfahren gemäß den Ansprüchen 1 bis 6 anwendet, gekennzeichnet dadurch, daß es mindestens eine Reihe akustischer Meßwandler (4.1, ... 4.i, ... 4n) verwendet, die mit einer Verarbeitungselektronik (6) verbunden sind, wobei jeder Meßwandler (4.i) von einem Träger (23.i) getragen wird, der in den Boden gerammt oder auf den Boden aufgelegt wird.

8. Erkennungsvorrichtung gemäß dem Anspruch 7, gekennzeichnet dadurch, daß sie mindestens eine Reihe gefluchteter Träger (23) umfaßt.

9. Erkennungsvorrichtung gemäß dem Anspruch 7, gekennzeichnet dadurch, daß sie mindestens zwei Reihen Träger (23) umfaßt, die auf gemeinsam wirkende Linien verteilt sind.

10. Erkennungsvorrichtung gemäß einem der Ansprüche 7 bis 9, gekennzeichnet dadurch, daß die Träger (23) fest mit mindestens einer Rampe (22) verbunden sind, die von mindestens einem Fahrzeug (21) getragen wird, wobei die Position der Rampe so anpaßbar ist, daß die Positionierung der Träger (23) in bezug auf den Boden ermöglicht wird.

11. Erkennungsvorrichtung gemäß den Ansprüchen 9 und 10, gekennzeichnet dadurch, daß jede Trägerreihe von einem anderen Fahrzeug (21a, 21b) getragen wird.

12. Erkennungsvorrichtung gemäß der Ansprüche 7 bis 9, gekennzeichnet dadurch, daß die Träger (23) einzeln auf dem Gelände (1) angebracht werden, wobei Funkverbindungsmittel (29, 30) zwischen jedem Träger und mindestens einem Teil der Verarbeitungselektronik (6) so vorgesehen sind, daß eine Synchronisierung der Sendungen der Meßwandler (4) erlaubt wird.

## Claims

1. A process to detect objects (2), and in particular mines dispersed over an area of land (1), characterised in that it implements a multiplicity of acoustic transducers (4.1, ...4.i, ...4n) and in that the following stages are carried out :
- an optimal operational frequency is firstly determined for the transducers in accordance with the type of ground, a frequency which gives a received signal amplitude which is at its maximum for the majority of the transducers when emitted by one of them,
- a brief and unfocused initial pulse in sent into the ground by at least one transducer at this optimal frequency,
- the echo signals returned by the ground and received by the transducers are recorded, each echo signal being memorised according to time, the start time being the instant of sending the initial pulse,
- by using at least one temporal window, the echo signals coming from a first object located in the area of land are selected,
- *k* successive time reversals of the signals received by the transducers are carried out so as to focus detection on the first object and the reflected signals are memorised at the end of the last temporal reversal ,
- the transducers having roughly the same propagation time are then looked for,
- at least one direction (D), called the location direction, is determined in which the first object lies, a direction defined as the mean perpendicular of the segment joining two transducers for which the propagation time is roughly equal.

2. A detection process according to Claim 1, characterised in that a position is determined for the first object along its location direction (D) by calculating the distances travelled by the reflected waves received by the transducers which define the location direction.

3. A detection process according to Claim 1, characterised in that the acoustic transducers are arranged along at least two converging lines (5a, 5b) and in that the location of the first object is determined as being the intersection point or zone (Z) of at least two location directions (Da, Db).

4. A detection process according to Claims 1 to 3, characterised in that after receiving the first echo signals the first object (2) to be processed by temporal reversal is chosen by analysing the wave shapes according to the different return echos received by each transducer followed by the comparison of these wave shapes against a library of the characteristic signatures of the main objects to be detected.

5. A detection process according to one of Claims 1 to 4, characterised in that the first object (2) is identified after carrying out the *k* temporal reversals by analysing the wave shapes according to the different echo signals received by each transducer and comparing these wave shapes with a library of characteristic signatures of the main objects to be detected.

6. A detection process according to one of Claims 1 to 5, characterised in that after locating and selecting a first object, at least one other acoustic signals is emitted to the latter having the shape of that memorised after the last temporal reversal , an amplified signal of sufficient intensity to make the object move or vibrate.

7. A device to detect objects (2), and in particular mines dispersed in an area of land, a device which implements the process according to Claims 1 to 6, characterised in that it comprises at least one row of acoustic transducers (4.1, ... 4.i, ... 4n) connected to processing electronics (6), each transducer (4.i) being carried by a support (23.i) designed to be pushed into or applied on the ground.

8. A detection device according to Claim 7, characterised in that it comprises at least one row of aligned supports (23).

9. A detection device according to Claim 7, characterised in that it comprises at least two rows of supports (23) arranged along converging lines.

10. A detection device according to one of Claims 7 to 9, characterised in that the supports (23) are integral with at least one ramp (22) fitted on at least one vehicle (21), a ramp whose position can be adjusted in order to allow the supports (23) to be positioned with respect to the ground.

11. A detection device according to Claims 9 and 10, characterised in that each row of supports is carried by a different vehicle (21a, 21b).

12. A detection device according to one of Claims 7 to 9, characterised in that the supports (23) can be installed individually on the land (1), radio link means (29, 30) being provided between each support and at least one part of the processing electronics (6) so as to allow the synchronization of pulses emitted by the transducers (4).
